# FASCICULE DE BREVET EUROPEEN

(11) **EP 0 635 349 B1**
(45) Date de publication et mention de la délivrance du brevet: **22.02.1995**
(21) Numéro de dépôt: 93440055.7
(22) Date de dépôt: 08.07.1993
(51) Int. Cl.: B29C 45/17, B62D 35/00

(54) **Procédé pour la fabrication de béquets ou spoilers pour automobiles**
Verfahren zum Herstellen von Autospoilern
Method for the manufacture of spoilers for cars

(43) Date de publication de la demande: 25.01.1995
(73) Titulaire: OMEGAL (Société Anonyme), 67540 Ostwald (FR)
(72) Inventeur: Schott, Eloi, F-67100 Strasbourg (FR); Amrhein, Bernard, F-67540 Ostwald (FR)
(74) Mandataire: Bossard, Jacques-René

(56) Documents cités:
- EP-A- 0 332 495
- EP-A- 0 374 123
- EP-A- 0 374 123
- EP-A- 0 401 498
- GB-A- 2 241 464

## Description

La présente invention concerne une nouvelle méthode pour la fabrication de pièces industrielles allongées destinées au domaine automobile, à savoir les divers types de déflecteurs désignés généralement par béquets ou "spoilers". Elle vise également les becquets et spoilers fabriqués conformément à cette méthode, et qui présentent par rapport aux pièces correspondantes fabriquées par les méthodes actuelles des particularités et des avantages considérables.

Ces pièces présentent des contraintes dimensionnelles particulières. Ainsi, un béquet arrière pour automobile de tourisme moyenne mesure au moins un mètre de long, alors qu'en largeur il mesure en moyenne moins de 10 cm.

De tels béquets sont habituellement fixés sur la carrosserie du véhicule au moyen de vis, et, compte tenu de leur fonction et de leurs dimensions, ces vis doivent prévenir toute vibration et être en conséquence en nombre suffisant sur toute la longueur du béquet.

Actuellement, de tels béquets sont réalisés principalement par moulage d'une pièce massive en matériau thermodurcissable tel que notamment les polyuréthanes, comme il est décrit notamment dans le document EP-A-0 332 495. Toutefois, une telle technique donne lieu à de nombreux inconvénients, à savoir entre autres :
- Leur poids : étant massifs, leur poids est de l'ordre de plusieurs kilogrammes et généralement compris entre 2 et 5 kg.
- Leur relative absence de rigidité : un béquet de dimensions usuelles pour une voiture de tourisme a à peu près la même souplesse que la même pièce en caoutchouc vulcanisé, c'est-à-dire fléchit si on le maintient par une extrémité. Cela impose de le fixer non seulement aux deux extrémités, mais encore en deux points de fixation intermédiaires.
- Cette fixation fait intervenir la mise en place par exemple par surmoulage, ou par insertion par ultra-sons, d'inserts métalliques filetés dans lesquels viennent se visser les vis de fixation. Cette mise en place d'inserts métalliques grève le prix de revient du béquet.
- Ce manque de rigidité impose au surplus souvent de renforcer ces béquets au moyen de pièces métalliques. Plus généralement, il n'est pas impossible de fabriquer des béquets suffisamment rigides, mais seulement s'ils sont massifs et très lourds. A l'inverse, s'ils sont légers, ils sont trop souples et rendent inévitables des points de support intermédiaires.
- Le moulage des polyuréthanes est une opération relativement longue pouvant atteindre une dizaine de minutes, ce qui grève également le prix de revient des béquets et impose le plus souvent la mise en oeuvre d'un outillage multiple.
- L'aspect de surface médiocre ou irrégulier des pièces moulées en résines thermodures telles que les polyuréthanes rend indispensable de procéder à des opérations de reprise et de préparation de surface, par exemple de ponçage et de peinture avant utilisation.

Certaines solutions ont été proposées pour pallier ces inconvénients.

Ainsi, la pièce allongée peut être réalisée sous forme de deux parties allongées réunies ensemble par collage ou clipsage. Outre la complexité de cette construction, elle impose, pour assurer la fixation, d'introduire dans la partie inférieure une pièce rapportée dans laquelle des inserts métalliques sont également rapportés ou surmoulés.

Une autre technique a également fait l'objet d'application, à savoir l'extrusion/soufflage de matériaux thermoplastiques, mais elle implique toujours un insert de fixation rapporté, ainsi que des opérations de reprise de surface.

Cet ensemble de contraintes conduit à des prix de revient de ces béquets relativement élevés, compris entre environ 400 et 700 FF.

La présente invention selon les revendications 1 et 4 élimine la totalité de ces inconvénients. Elle vise la fabrication de tels béquets par application de la technique de moulage par Injection Centrale de Gaz sous pression (I.C.G.) à des matières plastiques semi-cristallines et amorphes choisies entre les polyamides (PA), les ABS (acrylonitrite / butadiène / styrène), les SAN (styrène / acrylonitrile), les ASA (acrylonitrile / styrène / acrylate), les PPE (polyphénylène éther oxyde), les PC / ABS (polycarbonate / acrylonitrile / butadiène / styrène), les PP (polypropylène), et préférentiellement les polyester-téréphtalates, éventuellement chargées de fibres de verre.

Cette technique permet d'obtenir des béquets ou spoilers pour automobiles, qui se caractérisent, entre autres, par les particularités suivantes :
- Leur légèreté, résultant à la fois du choix du matériau et du fait que ces pièces sont creuses avec une épaisseur de paroi très mince. En effet, selon l'invention, grâce à l'application de la technique ICG, les béquets obtenus présentent un rapport section creuse / section totale de l'ordre de 40% et un rapport section creuse / section masse de l'ordre de 60%, de sorte qu'un béquet typique pèse seulement en moyenne de l'ordre de 600 à 1500 g.

(On rappelle que :
- La section creuse est la superficie de la section transversale de la portion creuse de la pièce.
- La section totale est la superficie de la section transversale de la pièce.
- La section masse est la superficie de la section transversale de la portion pleine de la pièce).
- Leur rigidité, qualité propre au matériau utilisé.
- L'absence de renforts rigidificateurs.
- L'absence de points de fixation intermédiaires entre les extrémités.
- La possibilité de fixation au moyen de vis auto-taraudeuses, éliminant la nécessité des inserts métalliques filetés.
- Leur rapidité de moulage (environ trois minutes), éliminant le besoin d'un matériel multiple.
- Leur aspect de surface, évitant le plus souvent l'obligation de les peindre.
- Par voie de conséquence, un prix de revient très abaissé, très inférieur à tous ceux pratiqués actuellement, pouvant par exemple être abaissé à 150 FF.

Le document EP-A-0401498 décrit bien l'application de la technique d'ICG à la fabrication de cadres pour raquettes de tennis, mais les contraintes techniques liées à ces produits sont essentiellement différentes de celles liées aux béquets pour automobiles. Ce même document mentionne bien la possibilité de transposer le procédé à des clubs de golf, des queues de billard ou des cannes à pêche, mais sans spécifier les conditions d'une telle transposition qui sont toujours différentes selon la pièce à obtenir et ses contraintes d'utilisation.

Ainsi, la transposition de ce procédé à des béquets et analogues donne naissance à des problèmes liés à la pression et au débit du gaz injecté, généralement de l'azote. L'invention repose sur la solution apportée à ces problèmes par un choix judicieux des tubulures et des buses d'injection et par une technique de contrôle de la pression notamment dans la phase décroissante à l'issue du moulage proprement dit.

Comme indiqué ci-dessus, les résines thermoplastiques appropriées à la fabrication des béquets selon l'invention sont de préférence les polyesters-téréphtalates, tels que les polyéthylène-téréphalates ou les polybutylène-téréphtalates.

Ce choix est dicté par la technique précitée, qui impose l'utilisation d'une résine thermoplastique, semi-cristalline ou amorphe, possédant, à l'état fondu ou ramolli, une fluidité suffisante pour former une pellicule pouvant être appliquée par pression gazeuse sur les parois d'un moule, et en même temps une ténacité suffisante pour que cette pellicule demeure en couche continue sans claquage pendant son expansion sous l'effet de cette pression, et, à l'état solidifié, une structure rigide se prêtant suffisamment au fluage pour y permettre le vissage de vis auto-taraudeuses.

A titre d'exemple d'illustration non limitatif, on va décrire ci-après plus en détail les conditions de mise en oeuvre du procédé selon l'invention.

Selon cette réalisation, on utilise comme matériau un polyester téréphtalate chargé en fibres de verre, à une température d'injection de 270 - 290° C, à laquelle la viscosité du matériau est adaptée au phénomène d'expansion sous une pression d'azote insufflé d'environ 300-350 bars.

Ladite injection d'azote est opérée au moyen d'une buse montée directement dans le canal d'injection de la matière dans le moule, cette dernière étant légèrement surchauffée (à environ 310° C) de manière que, au moment du passage du gaz, ce dernier ne vienne pas figer la matière, ce qui risquerait de créer des problèmes de décompression au moment du recul de l'unité d'injection par rapport au moule.

Le processus se déroule suivant le cycle suivant :
- Dans un premier temps, le volume total de la matière pour une pièce est injecté avec une pression d'injection de gaz nulle. Cette opération dure environ 1,5 secondes.
- A la fin de l'injection de matière, la pression d'injection de gaz est portée rapidement à sa valeur maximale, et la pression d'injection de matière est interrompue, tandis que le volume de matière pour la pièce suivante est dosé dans la machine. L'ensemble des opérations précitées se déroule sur environ 12 secondes. L'épaisseur de la paroi de la pièce creuse obtenue est de l'ordre de 1 à 3 mm.
- A l'étape suivante du cycle, la pièce subit une légère décompression au cours de son refroidissement. Cette décompression résulte de l'expansion du gaz dans tout le volume creux de la pièce qui en compense le retrait. Cette étape dure environ 2 minutes.
- Enfin, dans les 10 - 15 secondes suivantes, c'est-à-dire jusqu'à la fin du cycle, on permet l'échappement de l'azote que l'on recueille éventuellement, la pièce est dégazée et le moule est finalement ouvert.

La durée totale du cycle est de l'ordre de 2,5 - 3 minutes.

Selon diverses variantes, l'azote peut être insufflé dans la matière par l'intermédiaire d'une buse montée non pas dans le canal d'injection de matière, mais directement dans la dose de matière déjà injectée dans le moule. L'insufflation de l'azote et la décompression peuvent d'ailleurs se faire par des buses différentes, éventuellement à obturation. Il est bien entendu que, dans tous les cas, les différents éléments constituant le réseau d'alimentation en azote (ou tout gaz équivalent) doivent présenter les dimensions appropriées pour le débit et la puissance adéquate dudit gaz lors de l'introduction dans la pièce tout en minimisant l'inertie de l'établissement de la pression dans ladite pièce, de manière à déterminer un phénomène régulier et reproductible quant aux épaisseurs à obtenir.

On va enfin commenter l'invention en se référant à la description suivante, illustrée par le dessin annexé sur lequel :
La figure 1 est une vue de face longitudinale d'un béquet tel qu'obtenu par les procédés antérieurs, en place sur une carrosserie.
Les figures 2a, 2b et 2c sont des vues en perspective partielles de coupes suivant II-II de la figure 1.
La figure 3 est une vue longitudinale de face d'un béquet selon l'invention, en place sur une carrosserie.
La figure 4 est une perspective partielle d'une coupe suivant IV-IV de la figure 3.

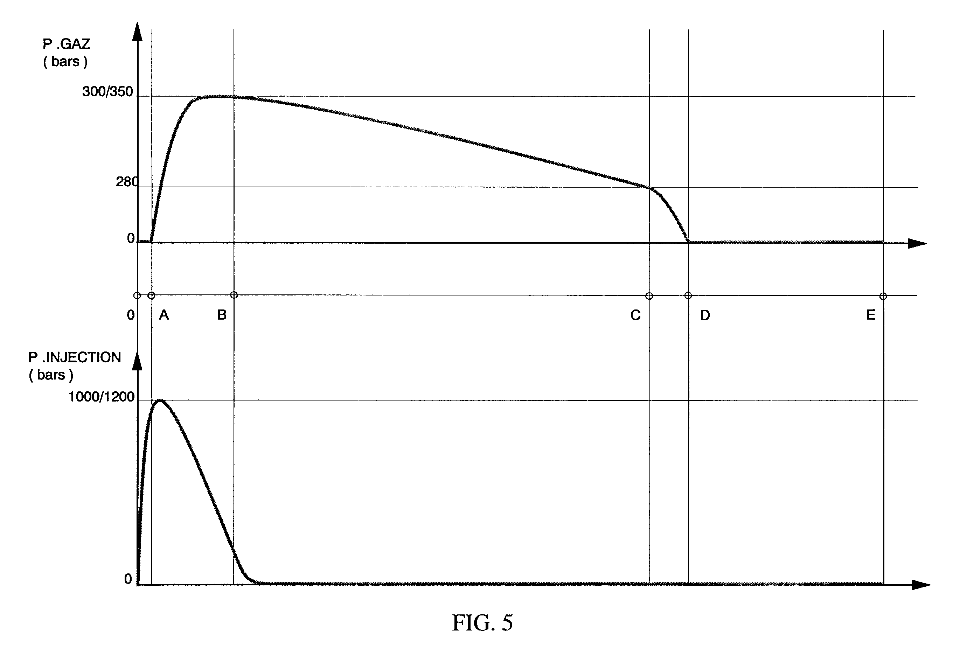

Et la figure 5 est un graphique illustrant le cycle de fabrication selon l'invention.

Un béquet arrière de véhicule se présente typiquement sous forme d'une pièce horizontale allongée 1 dont les extrémités galbées 1'-1'' sont fixées sur un élément de carrosserie 2 d'allure générale horizontale.

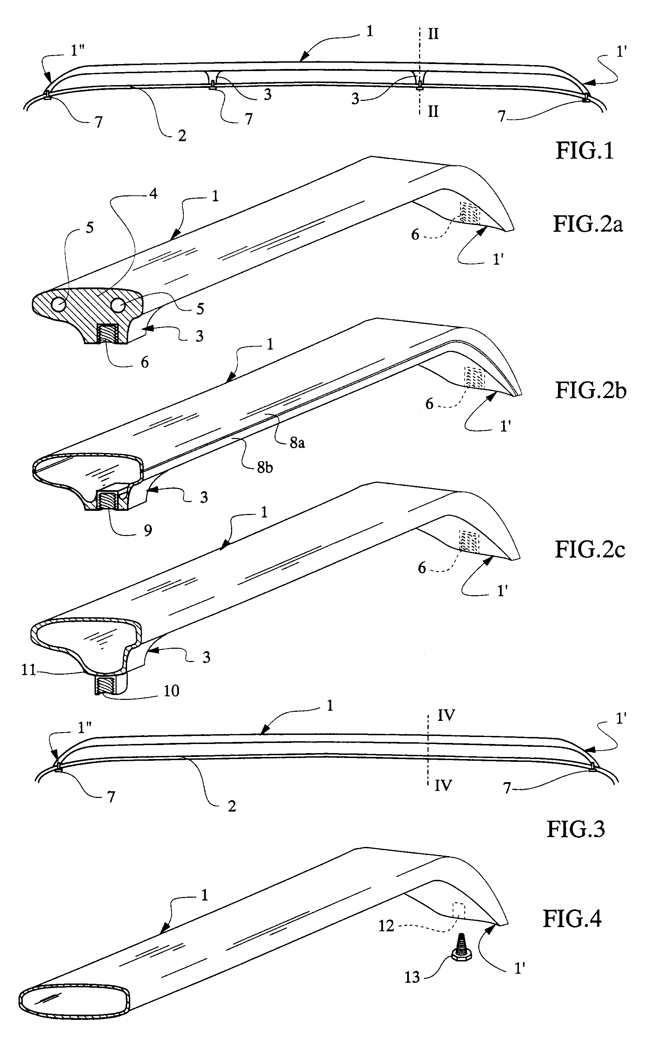

Dans ces réalisations antérieures, des pieds intermédiaires 3 servaient à assurer l'immobilisation de la pièce 1, les extrémités 1'-1'' et les pieds 3 étant fixés à la carrosserie par des vis de la manière illustrée par les figures 2a, 2b et 2c.

Dans le cas de la figure 2a, l'ensemble du béquet était formé d'une pièce massive 4 moulée en résine thermodurcissable telle qu'un polyuréthane, renforcée par des inserts métalliques longitudinaux 5, et dans les pieds 1'-1'' et 3 de laquelle étaient surmoulés des inserts métalliques filetés 6 servant à recevoir les vis de fixation 7.

Dans le cas de la figure 2b, le béquet est formé de deux parties 8a, 8b réunies le long de leurs bords longitudinaux par collage ou clipsage. Dans les pieds 1', 1'' et 3 de la partie inférieure 8b sont également rapportées des pièces 9 dans lesquelles sont surmoulés des inserts métalliques filetés 6, servant à recevoir les vis de fixation 7.

Enfin, dans le cas de la figure 2c, la pièce 1 est creuse, obtenue par extrusion/soufflage, ce qui exige pour la fixation des vis de fixation 7 des inserts métalliques filetés 10 également rapportés dans des logements 11 de la zone creuse inférieure de la pièce 1. Selon une variante, les vis 7 sont des vis à expansion venant se bloquer dans ladite zone creuse.

Les figures 3 et 4 font bien ressortir les différences essentielles que présente le béquet selon l'invention.

Dans ce cas, la pièce 1 est une pièce creuse venue par la technique I.C.G. d'une résine thermoplastique du type polyester téréphtalate, dont la rigidité permet d'éliminer les pieds intermédiaires 3, tout en permettant de ménager aux extrémités galbées 1'-1'' des logements destinés à recevoir directement des vis auto-taraudeuses 13, sans requérir d'inserts métalliques, ni de rigidification, ni fileté.

A la simplification du processus de fabrication s'ajoutent donc la simplification de la pièce elle-même, et ses propriétés avantageuses de poids, rigidité et prix.

Enfin, en se reportant au graphique de la figure 6, on y a fait apparaître la subdivision du cycle complet de fabrication du béquet, en termes de pression exercée par la machine d'injection sur la matière à mouler et par le gaz insufflé sur la pièce moulée :

Sur ce graphique, en abscisses sont portées les durées en secondes et, en ordonnées sont portées les pressions en bars, à savoir, dans la partie supérieure la pression du gaz insufflé et dans la partie inférieure la pression d'injection de la matière. Pour des raisons de clarté évidentes, sur ce graphique, aucune des échelles n'est respectée. On y voit :
- Entre le point O et le point A, représentant une durée d'environ 1,5 secondes, la matière fondue est injectée dans le moule à une pression pouvant se situer entre 700 et 1500 bars, la valeur optimale étant de l'ordre de 1000-1200 bars.

Aucun gaz n'est insufflé dans cette étape.
- Entre le point A et le point B, la matière ayant été injectée, on y insuffle de l'azote sous une pression de l'ordre de 300-350 bars, pendant une période d'environ 10 secondes.
- Entre le point B et le point C, sur une période d'environ 2 minutes, la matière se refroidit et le gaz situé dans le volume creux, s'expansant pour compenser le retrait de la matière, sa pression descend progressivement jusqu'à environ 280 bars au maximum. Cette chute relativement limitée de la pression du gaz peut d'ailleurs être évitée si l'on poursuit l'insufflation de gaz pendant le refroidissement.
- Entre le point C et le point D, c'est-à-dire sur une période d'environ 10 secondes, le gaz est laissé à s'échapper, par des moyens variables selon la technique d'arrivée du gaz.
- Enfin, sur la fin du cycle, sur une période DE pouvant se situer entre 5 et 35 secondes selon la technique d'extraction utilisée, on procède à l'ouverture du moule et au démoulage.

Ce graphique donne donc une bonne idée de la chronologie d'un cycle - étant entendu qu'en fait, un tel cycle ne dure que 3 minutes environ au total.

## Revendications

1. Produit industriel constitué par un béquet ou spoiler en résine synthétique pour automobile, ledit béquet présentant une première dimension, mesurée dans une première direction, supérieure à au moins dix fois une seconde dimension, mesurée dans une seconde direction, le rapport de sa section creuse à sa section totale étant de l'ordre de 40% et le rapport de sa section creuse à sa section en masse étant de l'ordre de 60%, ladite pièce creuse étant obtenue par application de la technique de moulage par Injection Centrale de Gaz sous pression (I.C.G.) à des matières plastiques semi-cristallines et amorphes choisies entre les polyamides (PA), les ABS (acrylonitrite / butadiène / styrène), les SAN (styrène / acrylonitrile), les ASA (acrylonitrile / styrène / acrylate), les PPE (polyphénylène éther oxyde), les PC / ABS (polycarbonate / acrylonitrile / butadiène / styrène), les PP (polypropylène), et préférentiellement les polyester-téléphtalates, éventuellement chargées de fibres de verre.

2. Béquet selon la revendication 1, caractérisé en ce qu'il possède une rigidité suffisante pour n'être fixé à la carrosserie de ladite automobile que par deux points situés indifféremment dans sa zone centrale ou à ses deux extrémités galbées.

3. Béquet selon les revendications 1 et 2, caractérisé en ce que ladite fixation est obtenue au moyen de vis auto-taraudeuses vissées directement dans ladite résine.

4. Procédé pour la production d'un béquet ou spoiler pour automobile selon l'une quelconque des revendications 1 à 3, caractérisé en ce qu'il consiste,
- dans un premier temps à injecter dans un moule une résine de type polyester téréphtalate fondue à une température de l'ordre de 270-290° C et à une pression d'injection de l'ordre de 1000-1200 bars, sur une période de l'ordre de 1,5 secondes, la buse d'injection étant légèrement surchauffée ;
- dans un second temps à insuffler dans la masse injectée en fusion un gaz inerte tel que l'azote sous une pression de l'ordre de 300-350 bars sur une période de l'ordre de 10 secondes ;
- dans un troisième temps, à laisser la matière se refroidir progressivement dans le moule sur une période de l'ordre de 2 minutes, la pression du gaz inerte s'abaissant progressivement jusqu'à environ 280 bars par son expansion compensant le retrait de la matière ou étant maintenue constante par poursuite de l'insufflation de gaz;
- dans un quatrième temps, à laisser le gaz s'échapper, sur une période de l'ordre de 10 secondes ;
- et enfin, dans un cinquième temps, sur une période de l'ordre de 5 à 35 secondes selon la technique d'extraction, à procéder à l'ouverture du moule et au démoulage de la pièce creuse.

5. Procédé selon la revendication 4, caractérisé en ce qu'il est prévu au moulage de réserver des orifices destinés à recevoir des vis auto-taraudeuses de fixation sur le véhicule, soit aux extrémités galbées de la pièce, soit en deux points intermédiaires formant pieds.

## Claims

1. Industrial product comprising of an airfoil or spoiler made of a synthetic material for automobiles, with the afore mentioned spoiler presenting a primary dimension, which is measured in a primary direction, that is greater than or equal to ten times that of a secondary dimension, which is measured in a secondary direction, the ratio between its hollow section and its total section being in the order of 40% and the ratio between its hollow section and its section in mass being in the order of 60%, the afore mentioned hollow portion being obtained by application of the technique known as the Central Injection of Gas under pressure technique (I.C.G) to semi crystalline and amorphous plastic materials selected from polyamides (PA), ABS materials, (acrylonitrile/butadine/styrene), SAN materials (styrene/acrylonitrile), ASA materials (acrylonitrile/styrene/acrylate), PPE materials (polyphenylene ether oxide) PC/ABS materials (polycarbonate/acrylonitrile/butadine/styrene), PP materials (polypropylene) and, as a preference, the polyester-telephtalates, which are eventually loaded with glass fibres.

2. Spoiler according to claim 1, characterised in that it possesses a rigidity that is sufficient for it to be necessary only to fix the afore mentioned spoiler to the bodywork of the afore mentioned automobile at two points which are indifferently situated in its central zone, or at both of its two curved ends.

3. Spoiler according to either of the claims 1 and 2, characterised in that the afore mentioned fixing is obtained by means of self tapping screws which are directly screwed into the afore mentioned resin.

4. Process for the production of an airfoil or spoiler for automobiles according to any of the claims 1 to 3, characterised in that it consists of,
- in the first place, injecting into a mould a resin of a polyester terephtalate type which is melted at a temperature in the order of between 270-290°C and at an injection pressure in the order of between 1000-1200 bar, for a period of time in the order of 1.5 seconds, with the injector nozzle being heated to a slightly higher temperature;
- in the second place, inducting into the injecting mass in fusion an inert gas such as nitrogen under a pressure in the order of between 300-350 bar for a period of time in the order of 10 seconds;
- in the third place, leaving the material to cool down progressively in the mould for a period of time in the order of 2 minutes, the pressure of the inert gas being progressively lowered to around 280 bar by either its expansion compensating for the withdrawal of the material or by being maintained at a constant following the induction of the gas;
- in the fourth place, allowing the gas to escape, over a period of time in the order of 10 seconds;
- and finally, in the fifth place, over a period of time in the order of between 5 and 35 seconds according to the extraction technique employed, proceeding to the opening of the mould and commencement of the unmoulding process of the hollow piece.

5. Process according to claim 4, characterised in that, at the moulding stage, the provision of orifices destined to receive the self tapping screws for fixing onto the vehicle is envisaged, either at the curved extremities of the piece, or at two intermediate points forming feet.

## Patentansprüche

1. Industrielles Produkt, das durch ein Luftleitelement oder einen Spoiler aus Kunstharz für Kraftfahrzeuge gegeben ist, wobei das Luftleitelement eine erste Abmessung aufweist, die in einer ersten Richtung gemessen wird und wenigstens zehnmal größer als eine zweite Abmessung ist, die in einer zweiten Richtung gemessen wird, wobei das Verhältnis seines Hohlquerschnitts zu seinem Gesamtquerschnitt in der Größenordnung von 40% liegt und das Verhältnis seines Hohlquerschnitts zu seinem Massenquerschnitt in der Größenordnung von 60% liegt, wobei das Hohlteil erhalten wird durch Anwenden der Gießtechnik mittels zentralen Einleitens von mit Druck beaufschlagtem Gas (ICG) in halbkristalline und amorphe Kunststoffsubstanzen, die gewählt sind aus den Polyamiden (PA), den ABS (Acrylnitril/Butadien/Styrol), den SAN (Styrol/Acrylnitril), den ASA (Acrylnitril/Styrol/Acrylat), den PPE (Polyphenylen-Ether-Oxid), den PC/ABS (Polycarbonat/Acrylnitril/Butadien/Styrol), den PP (Polypropylen) und vorzugsweise den Polyester-Terephtalaten, die eventuell Glasfasern enthalten.

2. Luftleitelement nach Anspruch 1, dadurch gekennzeichnet, daß es eine ausreichende Steifigkeit besitzt, um an der Karosserie des Kraftfahrzeugs nur an zwei Punkten befestigt zu werden, die sich entweder in seiner Mittelzone oder an seinen beiden gebogenen Enden befinden.

3. Luftleitelement nach den Ansprüchen 1 und 2, dadurch gekennzeichnet, daß die Befestigung mittels selbstschneidender Schrauben, die direkt in das Harz geschraubt werden, erhalten wird.

4. Verfahren zum Herstellen eines Luftleitelements oder eines Spoilers für Kraftfahrzeuge nach einem der Ansprüche 1 bis 3, dadurch gekennzeichnet, daß es darin besteht,
- zu einer ersten Zeit in eine Gießform ein Harz des Polyester-Terephtalat-Typs mit einer Temperatur in der Größenordnung von 270 bis 290°C und mit einem Einspritzdruck in der Größenordnung von 1000-1200 Bar während eines Zeitintervalls in der Größenordnung von 1,5 Sekunden einzuspritzen, wobei die Einspritzdüse leicht übererwärmt ist;
- zu einer zweiten Zeit in die eingespritzte, geschmolzene Masse ein Inertgas wie etwa Stickstoff mit einem Druck in der Größenordnung von 300-350 Bar während eines Zeitintervalls in der Größenordnung von 10 Sekunden einzublasen;
- zu einer dritten Zeit die Substanz in der Gießform während eines Zeitintervalls in der Größenordnung von 2 Minuten progressiv abkühlen zu lassen, wobei der Druck des Inertgases durch dessen die Volumenminderung der Substanz kompensierende Ausdehnung progressiv auf ungefähr 280 Bar absinkt oder durch fortgesetztes Einblasen von Gas konstant gehalten wird;
- zu einer vierten Zeit während eines Zeitintervalls in der Größenordnung von 10 Sekunden das Gas entweichen zu lassen;
- und schließlich zu einer fünften Zeit während eines Zeitintervalls in der Größenordnung von 5 bis 35 Sekunden gemäß der Entnahmetechnik die Gießform zu öffnen und das Hohlteil zu entformen.

5. Verfahren nach Anspruch 4, dadurch gekennzeichnet, daß beim Gießen vorgesehen ist, entweder an den gebogenen Enden des Teils oder an zwei dazwischenliegenden Punkten, die Fußteile bilden, Öffnungen freizuhalten, die dazu bestimmt sind, selbstschneidende Schrauben für die Befestigung am Fahrzeug aufzunehmen.
